# EUROPEAN PATENT APPLICATION

(11) **EP 1 850 209 A2**
(43) Date of publication of application: **31.10.2007**
(21) Application number: 07006037.1
(22) Date of filing: 23.03.2007
(51) Int. Cl.: G06F 3/023

(54) **Device and method for inputting keys in a wireless portable terminal**

(30) Priority: 25.04.2006 KR 20060037150
(71) Applicant: Samsung Electronics Co., Ltd., Suwon-si, Gyeonggi-Do (KR)
(72) Inventor: Cha, Jung-Sook c/o Samsung Electronics Co., Ltd., Suwon-si, Gyeonggi-do (KR); Ku, Young-Chel c/o Samsung Electronics Co., Ltd., Suwon-si, Gyeonggi-do (KR); Park, Yong-Kyeong c/o Samsung Electronics Co., Ltd., Suwon-si, Gyeonggi-do (KR)
(74) Representative: Lang, Johannes

(57) **Abstract**

A device and method for inputting keys in a portable terminal, where a key used for performing functions of the portable terminal can be easily input. The device includes a key input unit including keys that have at least two regions on each key wherein data are arranged on each key to correspond to each region. The device also includes a controller unit for displaying the data on one of at least two regions of a key. For example, the region corresponds to a key input when the key provided to the key input unit is inputted and thereafter, displays only data arranged on a region in a corresponding region input mode of displaying only data arranged on one of at least two regions of a key when the key provided to the key input unit is inputted or displays data set to a key group including the inputted key.

## Description

### BACKGROUND OF THE INVENTION

### 1. Field of the Invention

The present invention relates to a device and method for inputting keys in a wireless portable terminal. More particularly, the present invention relates to a device and method for inputting keys in a wireless portable terminal which can allow a user to easily input keys for carrying out the functions of a wireless portable terminal.

### 2. Description of the Related Art

On a key input unit of a general portable terminal, a plurality of characters and numbers are arranged and displayed on each key provided.
According to the related art, in order to use a plurality of character keys arranged on the key input unit, a user has to change the current mode of inputting keys to a mode using corresponding data among other data and then input the keys so as to display corresponding data.
Accordingly, there is a need for an improved device and method for inputting keys in a wireless portable terminal which enables a user to easily input keys for carrying out functions of the wireless portable terminal.

### SUMMARY OF THE INVENTION

Exemplary embodiments of the present invention have been developed to solve the above-mentioned problems and provide at least the advantages described below. Accordingly, an aspect of the exemplary embodiments of the present invention is to provide a device and method for inputting keys in a wireless portable terminal, which enables a user to easily input keys for carrying out functions of the wireless portable terminal.
According to one exemplary embodiment of the present invention, there is provided a device for inputting keys in a portable terminal, where the device includes a key input unit including keys wherein each key has at least two regions with data arranged to correspond to each region and a controller unit for displaying data arranged on one of at least two regions of a key. For example, when input is provided to the key in the key input unit that corresponds to the region on a key, the controller displays only data arranged on a region that is set to be in a corresponding region input mode of displaying only the data arranged on one of at least two regions of a key or displaying the data set to a key group that includes the inputted key.
In another exemplary aspect of the present invention, there is provided a method for inputting keys in a portable terminal which includes determining which one of at least two regions of a key has been inputted and displaying data arranged in the corresponding region if it is determined which one of at least two regions of the key has been inputted.
In another exemplary aspect of the present invention, there is provided a method for inputting keys in a portable terminal which includes determining if the keys are set to be in a corresponding region input mode of displaying only data arranged in one of at least two regions constituting a key when the key has been inputted and displaying only the data arranged in one of at least two regions constituting the key that is set to be in the corresponding input mode if the keys are set to be in the corresponding region input mode.
In another exemplary aspect of the present invention, there is provided a method for inputting keys in a portable terminal which includes determining a key group including a key if the key is inputted and displaying data arranged in the key group if the key group is determined.
In another exemplary aspect of the present invention, there is provided a method for inputting keys in a portable terminal which includes determining the kind of input mode if a key is inputted, displaying data arranged in one of at least two regions constituting the input key if the portable terminal stays in a first input mode, displaying data arranged in a region set to be in a corresponding region input mode of displaying only data arranged on one of at least two regions constituting the input key if the portable terminal stays in a second input mode and displaying data belonging to a key group including the input key if the portable terminal stays in a third input mode.

### BRIEF DESCRIPTION OF THE DRAWINGS

The above and other objects, features, and advantages of certain exemplary embodiments of the present invention will be more apparent from the following description taken in conjunction with the accompanying drawings in which:
FIG. 1 is a block diagram illustrating a wireless portable terminal according to an exemplary embodiment of the present invention;
FIG. 2 is a view showing a configuration of a key input unit of the wireless portable terminal according to an exemplary embodiment of the present invention;
FIG. 3 is a flowchart illustrating processes for displaying data input by a key input unit of the wireless portable terminal according to an exemplary embodiment of the present invention;
FIG. 4 is a flowchart illustrating processes for displaying data input by a key input unit of the wireless portable terminal according to an exemplary embodiment of the present invention; and
FIG. 5 is a flowchart illustrating processes for displaying data input by a key input unit of the wireless portable terminal according to an exemplary embodiment of the present invention.

### DETAILED DESCRIPTION OF THE PREFERRED EMBODIMENT

The matters defined in the description such as a detailed construction and elements are provided to assist in a comprehensive understanding of exemplary embodiments of the invention. Accordingly, those of ordinary skill in the art will recognize that various changes and modifications of the embodiments described here can be made without departing from the scope and spirit of the invention. Also, descriptions of well-known functions and constructions are omitted for clarity and conciseness.

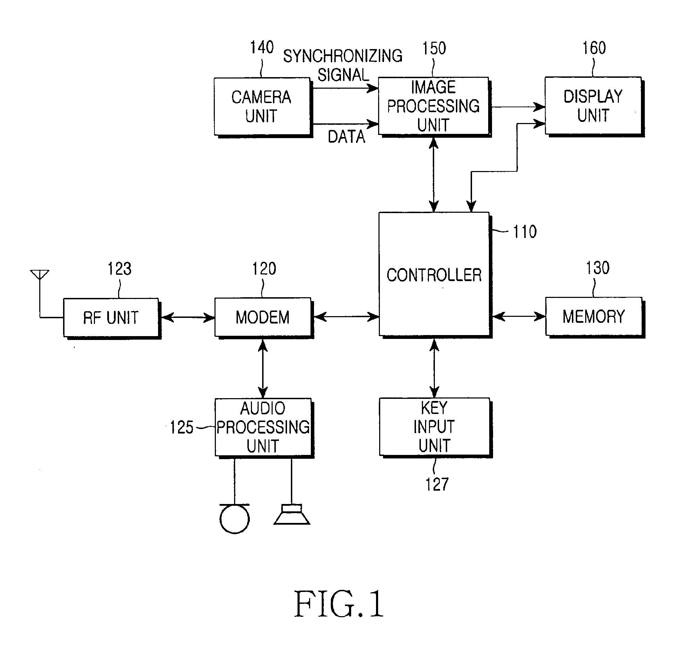

FIG. 1 is a block diagram illustrating a wireless portable terminal according to an embodiment of the present invention.
Referring to FIG. 1, a Radio Frequency (RF) unit 123 performs a wireless communication function of the wireless portable terminal. The RF unit 123 includes an RF transmitter for up-converting and amplifying the frequency of signals to be transmitted and an RF receiver for low noise-amplifying and down-converting the frequency of received signals. A MODEM 120 includes a transmitter for coding and modulating the signals to be transmitted, and a receiver for demodulating and decoding the received signals. An audio processing unit 125 has a CODEC including a data codec for processing packet data, and so on, and an audio codec for processing audio signals. The audio processing unit 125 converts digital audio signals received from the MODEM 120 into analog audio signals through the audio codec so as to replay the converted audio signals, or converts analog audio signals generated and transmitted in/from a microphone into digital audio signals through the audio codec so as to transmit the digital audio signals to the MODEM 120. The CODEC can be separately mounted on the wireless portable terminal or integrated with a controller 110.
A memory 130 may include a program memory and data memory. The program memory may store programs for controlling general operations of the wireless portable terminal therein. Meanwhile, the data memory performs a function of temporarily storing data generated in the executing of the programs.
The controller 110 carries out universal operations of the wireless portable terminal. Further, the controller 110 may include the MODEM 120 and the CODEC.

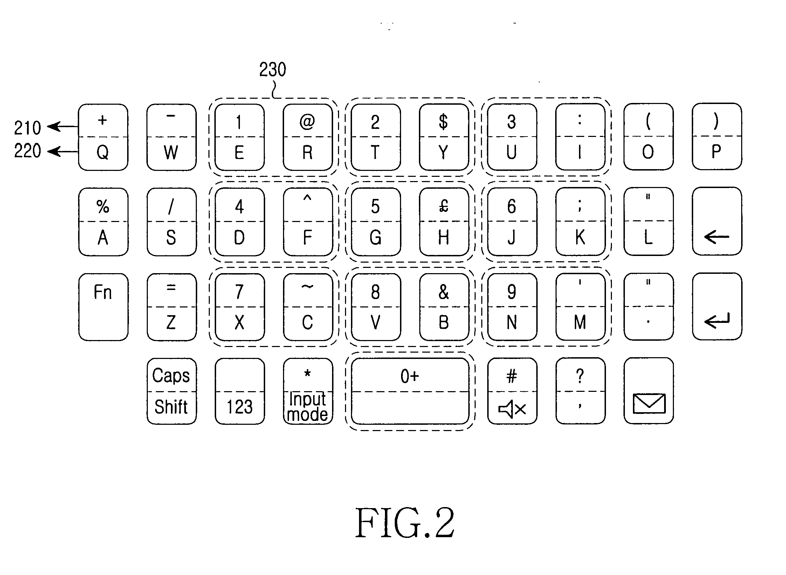

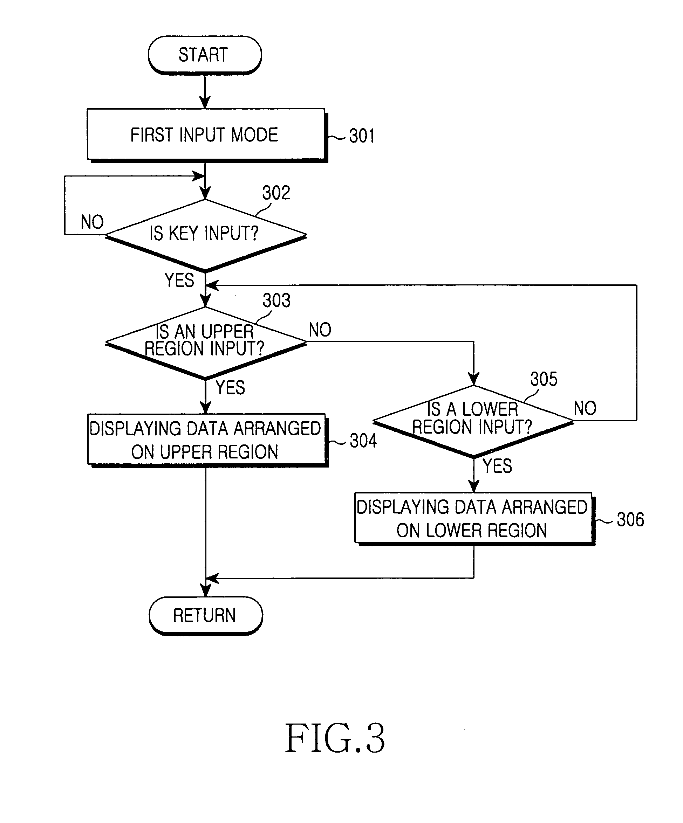

Further, the controller 110 determines the kind of input modes of the wireless portable terminal according to an exemplary embodiment of the present invention. If the portable terminal stays in a first input mode, the controller 110 enables the display unit to display data arranged in a region corresponding to one of upper and lower regions of an input key when a key provided to the key input unit 27 is inputted.
In addition, if the portable terminal stays in a second input mode according to an exemplary embodiment of the present invention, the controller 110 enables the display unit to display only data arranged in one of the upper and lower regions of an input key. For example, a region set to be in an input mode, when a key provided the key input unit 27 is inputted.
Furthermore, if the portable terminal is in a third input mode according to an exemplary embodiment of the present invention, the controller 110 enables the display unit to display numeral data marked on any one of a key group including an input key when the key provided to the key input unit 127 is inputted.
A camera unit 140 includes a camera sensor for photographing image data and converting optical signals of the photographed image data into electric signals and a signal processing unit for converting analog image signals of the image data photographed by the camera sensor into digital data. The camera sensor may be a CCD sensor and the signal processing unit includes a Digital Signal Processor (DSP). Further, the camera sensor and the DSP may be integrally or separately configured.
An image processing unit 150 carries out a function of creating screen data used for displaying image signals output from the camera unit 140. The image processing unit 150 processes image signals output from the camera 140 by a unit of frame, and outputs the frame image data to fit to the characteristic and size of the display unit 160. Further, the image processing unit 150 includes an image CODEC, which compresses the frame image data displayed on the display unit 160 in a preset manner or recovers the compressed frame image data to an original frame image data. Here, the image CODEC may include a JPEG CODEC, an MPEG4 CODEC, and wavelet CODEC, and so on. The image processing unit 150 includes an On Screen Display (OSD) function, and can output on-screen display data according to the size of an image displayed under the control of the controller 110.
The display unit 160 displays image signals output from the image processing unit 150 on the screen, and user's data output from the controller 110. Here, the display unit 160 may be a Liquid Crystal Display (LCD). In this case, the display unit 160 includes a LCD controller, a memory for storing image data, and a LCD display element, and so on. When a touch-screen type LCD is used as the display unit, the display unit can operate as an input unit.
The key input unit 127 includes keys used for inputting numeral and character information, and function keys used for setting various functions. Further, the key input unit 127 has at least two regions according to an exemplary embodiment of the present invention and includes keys to input data which correspond to the regions, respectively. FIG. 2 is a view showing a configuration of the key input unit 127 of the wireless portable terminal according to an exemplary embodiment of the present invention. Data arranged in the upper and lower regions of the key may include character/special character/function display/short-key display, and so on.
As shown in FIG. 2, the key input unit 127 includes keys with the upper region 210 and the lower region 220. Corresponding data are arranged in the upper and lower regions.
Hereinafter, operation of the portable terminal which displays data according to the key input will be described in detail with reference to FIGS. 3 to 5.
FIG. 3 is a flowchart illustrating processes for displaying data input by a key input unit of the wireless portable terminal according to an embodiment of the present invention.
Hereinafter, an embodiment of the present invention will be described in detail with reference to FIGS. 1 and 2.
Referring to FIG. 3, the controller 110 of the portable terminal determines the current input mode. If the portable terminal stays in the first input mode, the controller 110 detects the current mode and awaits the key input in the first input mode at step 301. If a certain key is input among the keys provided to the key input unit 127, the controller 110 detects the key input at step 302 and determines which region of the upper and lower regions 210 and 220 of the input key is inputted.
If the upper region of the key is inputted, the controller 110 detects the input of the upper region of the key at step 303 and enables the display unit 160 to display the data arranged in the upper region 210 of the key at step 304.
However, if the lower region of the key is inputted, the controller 110 detects the input of the upper region of the key at step 305, and enables the display unit 160 to display the data arranged in the lower region 220 of the key at step 306.

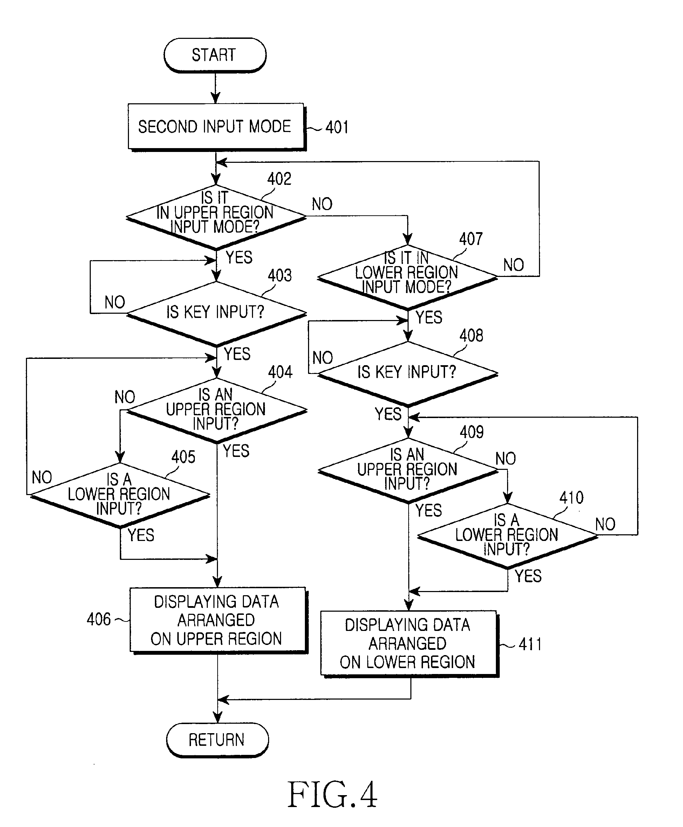

FIG. 4 is a flowchart illustrating processes for displaying data input by a key input unit of the wireless portable terminal according to an exemplary embodiment of the present invention.
Hereinafter, an exemplary embodiment of the present invention will be described in detail with reference to FIGS. 1 and 2.
Referring to FIG. 4, the controller 110 of the portable terminal determines the current input mode of the portable terminal. For example, if the portable terminal stays in the second input mode, the controller 110 detects the mode of the portable terminal, and determines if one of the upper and lower regions constituting the key is set to the region which is in the corresponding input mode, at step 401. The setting of one of the upper and lower regions to the corresponding input mode can be performed by a user's selection.
If the upper region is set to stay in the input mode, the controller 110 detects it at step 402 and awaits the key input.
If a certain key among the keys provided to the key input unit 127 is inputted, the controller 110 detects the key input at step 403, and enables the display unit to display only data arranged in the upper region of the key without relation to the upper and lower regions 210 and 220 of the input key. If the upper region of the key is inputted, the controller 110 detects the key input of the upper region at step 404 and enables the display unit 160 to display the data arranged in the upper region 210 of the key at step 406.

When the lower region of the key is input, the controller 110 detects the key input at step 405 and displays the data arranged on the upper region 210 of the key on the display unit 160 at step 406.
If the lower region of the key is set to stay in the input mode, the controller 110 detects the current input mode at step 407 and awaits the key input.
When a certain key among the keys provided to the key input unit 127 is inputted, the controller 110 detects the key input at step 408 and displays only the data arranged on the lower region 220 of the key regardless of the upper and lower regions 210 and 220 constituting the input key. In other words, when the upper region of the key is input, the controller 110 detects the key input at step 409 and displays the data arranged on the lower region 220 of the key on the display unit 160 at step 411.
When the lower region of the key is inputted, the controller 110 detects the key input at step 410 and displays the data arranged on the lower region 220 of the key on the display unit 160 at step 411.

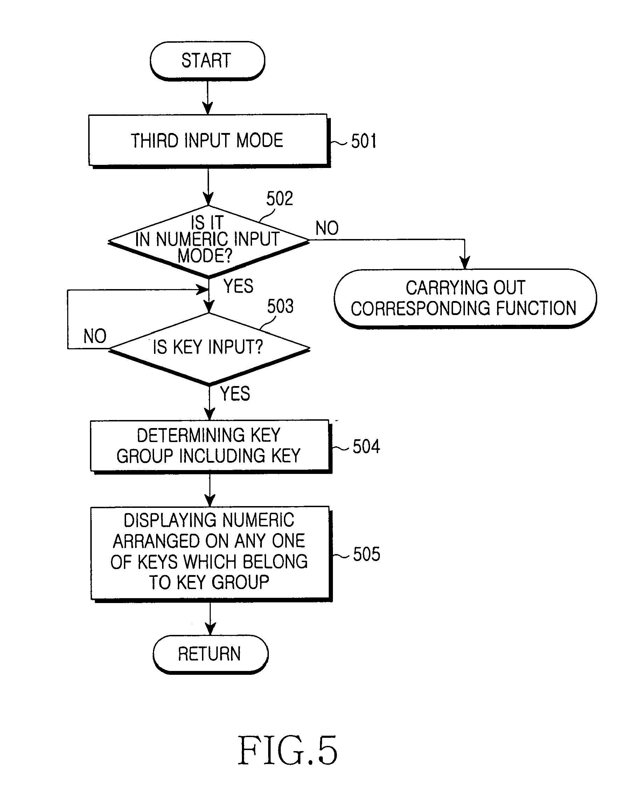

FIG. 5 is a flowchart illustrating processes for displaying data input by a key input unit of the wireless portable terminal according to another embodiment of the present invention.
Hereinafter, the exemplary embodiments of the present invention will be described in detail with reference to FIGS. 1 and 2.
Referring to FIG. 5, the controller 110 of the portable terminal determines the current mode the portable terminal. If the portable terminal stays in the third input mode, the controller 110 detects it and determines the kind of data input mode at step 501. If the data input mode is set to a numeral input mode, the controller 110 detects it at step 502 and awaits a key input.
When a certain key among the keys provided to the key input unit 127 is inputted, the controller 110 detects the key input at step 503 and determines whether a key group includes the input key at step 504. If it is determined that the key group includes the input key, the controller 110 displays the numeral arranged on a certain key among the keys which belongs to the key group on the display unit 160 at step 505. On the other hand, although the keys belonging to the key group are taneously input at step 505, the controller 110 displays the numeral arranged on one of the keys belonging to the key group on the display unit 160.
Referring to FIG. 2, in an exemplary embodiment of the present invention, a key group 230 includes two keys. Specifically, the first key of the group has a numeral '1' arranged on the upper region 210 and a character 'E' arranged on the lower region 220 and the second key of the group has a special character '@' arranged on the upper region 210 and a character 'R' arranged on the lower region.
In the numeral input mode which is the third input mode, regardless of whether the numeral '1' of the first key is inputted, the character 'E' of the first key is inputted, the special character `@' of the second key is inputted or the character 'R' of the second key is inputted, only the numeral '1' is inputted. Although at least two data among '1' and 'E' arranged on the first key and '@' and 'R' arranged on the second key are simultaneously inputted or continuously input at a time interval, only the numeral '1' is input.
However, if at least two data among '1' and 'E' arranged on the first key and '@' and 'R' arranged on the second key are inputted with a large time interval in between, it is determined that the two key inputs are different and distinct inputs, so that at least two data items are displayed in the order of the inputting of the data. The data set to the key group are set to be arranged by a user on one of the keys belonging to the key group.
As shown in FIGS. 3 to 5, the selection of one input mode from the first, second, and third input modes is accomplished by the input of a key or a selection of a menu item in order to display the data through the key input unit of the portable terminal.
Further, in another exemplary embodiment, the first, second, and third input modes are automatically set according to the current mode of the portable terminal. For example, if the portable terminal currently stays in a standby mode, the controller 110 detects it, and changes the standby mode of the portable terminal into a numeral input mode of the third input mode. The third input mode is changed to the first input mode or the second input mode through the input of a key so as to display the corresponding data.

Further, if the portable terminal stays in a message mode, the controller 110 detects it and changes the second input mode to one of the upper and lower input modes. The change of the second input mode to the upper input mode or the lower input mode can be achieved through the selection of a key or menu. On the other hand, the portable terminal can be changed from the second input mode to the first input mode or the third input mode through the input of a key for the change of the input mode, so as to display the corresponding data. The automatic change of the portable terminal to one of the first, second and third input modes according to the current mode of the portable terminal may be carried out by the portable terminal or a user.
The method for inputting keys in a wireless portable terminal according to the above-described exemplary embodiments of the invention may be recorded in computer-readable media including program instructions to implement various operations embodied by a computer. The media may also include, alone or in combination with the program instructions, data, files, data structures, and the like. Examples of computer-readable media include magnetic media such as hard disk, floppy disks and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, and the like including a carrier wave transmitting signals specifying the program instructions, data structures, and the like. Examples of program instructions include both machine code, such as produced by a compiler, and files containing higher level code that may be executed by the computer using the interpreter. The described hardware devices may be configured to act as one or more software modules in order to perform the operations of the above-described exemplary embodiments of the present invention.
As described above, the exemplary embodiments of the present invention provide a device and method for inputting keys using a key input unit which includes at least two regions on each key, thereby allowing a user to easily inputting keys.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A device for inputting keys in a portable terminal comprising:
a key input unit including keys, wherein each key has at least two regions and on which data are arranged to correspond to each region; and
a controller for displaying data arranged on one of at least two regions constituting a key or for displaying data set to a key group including the key that is inputted or for displaying only data arranged on a region set to be corresponding region input mode.

2. The device of claim 1, wherein the key provided to the key input unit includes upper and lower regions in which corresponding data are arranged, respectively.

3. A method for inputting keys in a portable terminal, comprising:
determining which one of at least two regions constituting a key is input when the key is input; and
displaying data arranged in the corresponding region if it is determined which one at least two regions constituting the key is input.

4. The method of claim 3, wherein in the case where the key has upper and lower regions, the method comprising:
determining which one of the upper and lower regions constituting the key is input when the key is input;
displaying data arranged on the upper region if the upper region is inputted; and
displaying data arranged on the lower region if the lower region is inputted.

5. A method for inputting keys in a portable terminal, comprising:
determining if the key is set to be in a corresponding region input mode of displaying only data arranged in one of at least two regions constituting a key when the key is input; and
displaying only data arranged in one of at least two regions constituting the key, set to be in the corresponding input mode, if the keys are set to be in the corresponding region input mode.

6. The method of claim 5, wherein in the case where the keys respectively have upper and lower regions, the method comprising:
determining if it is set to be in a corresponding region input mode of displaying only data arranged in one of at least two regions of a key when the key is inputted;
displaying only data arranged in the upper region of the key if the portable terminal stays in the upper region input mode; and
displaying only data arranged in the lower region of the key if the portable terminal stays in the lower region input mode.

7. A method for inputting keys in a portable terminal, comprising:
determining a key group including a key if the key is input; and
displaying data arranged in the key group if the key group is determined.

8. The method of claim 7, wherein displaying the data further comprising:
determining the number of input keys if the key group including the input key is determined;
determining a time interval between at least two input keys if at least two keys are inputted;
displaying data arranged in the key group if the time interval between at least two input keys is within a predetermined value; and
displaying data arranged on at least two keys in the order of the inputting of the keys if the time interval between the two input keys is larger than the predetermined value.

9. The method of claim 7, further comprising
inputting numeral data if a key group includes at least two keys with upper and lower regions;
determining the key group including the input key if the key is inputted; and
displaying the numeral data arranged on one of the keys belonging to the key group.

10. The method of claim 9, wherein the step of displaying the numeral data further comprising:
determining the number of the input keys if the key group including the input key is determined;
determining a time interval between at least two input keys if the at least two keys are inputted;
displaying the numeral data arranged on one of the keys belonging to the key group if the time interval between the at least two keys is within the predetermined value; and
displaying numeral data arranged on the at least two keys in the order of inputting of the data if the time interval is larger than the predetermined value.

11. A method for inputting keys in a portable terminal comprising:
determining the kind of input mode if a key is input;
displaying data arranged in one of at least two regions constituting the input key if the portable terminal stays in a first input mode;
displaying data arranged in a region set to be in a corresponding region input mode of displaying only data arranged on one of at least two regions constituting the input key if the portable terminal stays in a second input mode; and
displaying data belonging to a key group including the input key if the portable terminal stays in a third input mode.

12. The method of claim 11, wherein determining the kind of the input modes further comprising:
identifying a current mode of the portable terminal if the key is input; and
determining the kind of the input modes according to the current mode of the portable terminal.

13. The method of claim 11, wherein in the case where the key includes upper and lower regions, the method for inputting keys in the first mode further comprising:
determining which one of the upper and lower regions constituting the input key is a corresponding region of the input key;
displaying data arranged on the upper region if the corresponding region is the upper region of the input key; and
displaying data arranged on the lower region if the corresponding region is the lower region of the input key.

14. The method of claim 11, wherein in the case where the key includes upper and lower regions, the method for inputting keys in the second mode further comprising :
determining if a corresponding region input mode of displaying only data arranged on one of the upper and lower regions which constitutes the input key is set;
displaying only data arranged in the upper region of the key if the corresponding region input mode is set to be in the upper region input mode; and
displaying only data arranged in the lower region of the key if the corresponding region input mode is set to be in the lower region input mode.

15. The method of claim 11, wherein in the case where a key group includes at least two keys with upper and lower regions, the method for inputting numeral keys in the third input mode further comprising:
determining the key group including the input keys; and
displaying numeral data arranged on one of the keys which belong to the key group if it is determined to be in the key group.

16. The method of claim 15, wherein the step of displaying the numeral data further comprising:
determining the number of the input keys if it is determined to be in the key group;
determining time interval between at least two input keys if at least two keys are input;
displaying numeral data arranged on one of the keys which belong to the key group if the time interval between at least two input keys is within a predetermined value; and
displaying numeral data arranged on at least two keys in the order of inputting keys if the time interval between at least two input keys is larger than the predetermined value.

17. The method of claim 11, wherein the current mode can be changed to one of the first, second, and third input modes by selecting a key or menu.

18. A computer-readable recording medium storing a program for implementing the method of claim 3.

19. A computer-readable recording medium storing a program for implementing the method of claim 5.

20. A computer-readable recording medium storing a program for implementing the method of claim 7.

21. A computer-readable recording medium storing a program for implementing the method of claim 11.
